# DEMANDE DE BREVET EUROPEEN

(11) **EP 0 716 277 A1**
(43) Date de publication de la demande: **12.06.1996**
(21) Numéro de dépôt: 95402732.2
(22) Date de dépôt: 04.12.1995
(51) Int. Cl.: F24H 1/22, F24H 1/28, F24H 1/30, F24D 12/02

(54) **Ensemble monobloc pour instalation de chauffage d'un fluide**

(30) Priorité: 06.12.1994 FR 9414649
(71) Demandeur: TECHNIX, F-16100 Merpins (FR)
(72) Inventeur: Aime, Bruno, F-86340 Les Roches Presmarie (FR)
(74) Mandataire: Rinuy, Santarelli

(57) **Abrégé**

Cet ensemble comporte un foyer et un échangeur de chaleur comportant des compartiments superposés (84-87) par lesquels doit passer successivement le fluide avec au moins un compartiment (84-86) dont la section d'écoulement est plus petite que celle du compartiment (85-87) qui lui succède.

## Description

L'invention a trait au chauffage des fluides.

On sait que pour communiquer de la chaleur à un ou plusieurs point(s) de consommation, on utilise couramment un fluide caloporteur et une chaudière, dans laquelle on fait passer le fluide pour le chauffer avant de le conduire au(x) point(s) de consommation de chaleur.

Les chaudières utilisées comportent classiquement un foyer à l'intérieur duquel on produit du feu générant des fumées, et un échangeur de chaleur fluide-fumées, disposé au-dessus du foyer, comportant des parois d'un côté duquel il est prévu que circule le fluide caloporteur alors que les fumées présentes dans le foyer passent de l'autre côté de ces parois pour rejoindre une bouche d'évacuation des fumées disposée au-dessus de l'échangeur.

L'invention vise à permettre le chauffage du fluide caloporteur d'une façon aussi économique que possible.

Elle propose à cet effet un ensemble monobloc pour installation de chauffage d'un fluide, comportant :
- un foyer, adapté à coopérer avec des moyens pour produire, à l'intérieur du foyer, du feu générant des fumées ; et
- un échangeur de chaleur comportant au moins une paroi d'un côté duquel il est prévu que circule ledit fluide, mis en circulation dans ledit échangeur entre un orifice d'entrée de fluide froid et un orifice de sortie de fluide chaud ;

caractérisé en ce que ledit échangeur de chaleur comporte des compartiments superposés par lesquels doit passer successivement ledit fluide avec au moins un compartiment dont la section d'écoulement est plus petite que celle du compartiment qui lui succède.

Ainsi, le débit d'écoulement du fluide dans ledit ensemble étant constant, la vitesse du fluide est plus rapide dans le compartiment du dessous que dans celui du dessus qui lui succède, de sorte que le fluide circulant dans le compartiment du dessous peut recevoir un flux de chaleur plus important, ce qui correspond en pratique à la répartition des flux de chaleur dans l'ensemble monobloc.

En prévoyant ainsi de faire circuler à vitesse élevée le fluide exclusivement aux endroits où le flux de chaleur est important, l'invention permet d'obtenir une efficacité du transfert de chaleur particulièrement élevée, tout en ayant une structure beaucoup plus simple que dans les échangeurs où la vitesse de circulation est constante.

Dans un premier mode de réalisation, ledit échangeur de chaleur est un échangeur fluide-fumées qui comporte :
- une cuve à l'intérieur de laquelle il est prévu que circule ledit fluide, présentant une paroi inférieure séparant l'intérieur de la cuve de l'intérieur dudit foyer, et une paroi supérieure séparant l'intérieur de la cuve de l'intérieur d'une boîte à fumées ; et
- un faisceau de tubes traversant chacun ladite paroi inférieure de la cuve, l'intérieur de celle-ci et sa paroi supérieure, de sorte que chaque tube a une extrémité qui se trouve dans ledit foyer et l'autre dans ladite boîte à fumées, les intérieurs respectifs des tubes formant les moyens de passage qu'empruntent les fumées présentes dans le foyer pour traverser l'échangeur et rejoindre la boîte à fumées.

Selon des caractéristiques préférées, ladite cuve comporte des plaques de chicane, traversées par lesdits tubes, créant dans la cuve des compartiments superposés orientés transversalement auxdits tubes, qui sont parallèles entre eux, chaque plaque de chicane séparant deux compartiments successifs en les laissant communiquer par une extrémité opposée à l'extrémité par laquelle le fluide pénètre dans le compartiment du dessous, de sorte que le parcours du fluide dans ladite cuve forme un zigzag dont chaque branche correspond à un compartiment.

On obtient ainsi de façon particulièrement simple les compartiments de l'échangeur conforme à l'invention, le fait que le fluide et les fumées se déplacent transversalement l'un par rapport à l'autre permettant d'obtenir un excellent rendement.

De préférence, pour simplifier la fabrication :
- les hauteurs respectives desdits compartiments croissent au fur et à mesure que l'on s'élève, alors que la section en plan de ladite cuve reste constante ;
- ladite cuve a une section en plan qui est rectangulaire, et lesdits tubes sont disposés en quinconce.

Selon d'autres caractéristiques préférées, les orifices pratiqués dans lesdits plaques de chicane pour lesdits tubes ont des dimensions légèrement supérieures aux dimensions extérieures des tubes.

Ainsi, au cas où le fluide est du liquide et que la cuve contiendrait un peu de vapeur provenant de la vaporisation du liquide, cette vapeur pourra rejoindre rapidement le sommet de la cuve, en passant par des espaces entre tubes et plaques de chicane, sans avoir à parcourir les compartiments les uns à la suite des autres.

Selon d'autres caractéristiques préférées comme permettant d'évacuer de façon relativement sûre les éventuels gaz de vaporisation de liquide, ladite cuve débouche dans un élément convergeant vers le haut, au sommet duquel se raccorde une extrémité d'un conduit à l'autre extrémité duquel se trouve ledit orifice de sortie du fluide chaud hors dudit ensemble.

Dans un deuxième mode de réalisation, éventuellement combiné au premier, ledit échangeur comporte des moyens pour contenir ledit fluide de sorte que celui-ci baigne l'extérieur de la paroi latérale du foyer, et pour canaliser le fluide de sorte qu'il se déplace le long de cette paroi lorsqu'on le fait circuler dans ledit ensemble, lesdits moyens pour contenir et canaliser le fluide étant situés, dans le trajet que suit le fluide dans ledit ensemble, entre ledit orifice d'entrée de fluide et ledit échangeur fluide-fumées.

De préférence, pour des raisons de simplicité et de commodité de réalisation :
- lesdits moyens pour contenir et canaliser le fluide comportent une paroi périphérique qui vient doubler extérieurement la paroi latérale du foyer, le fluide étant contenu et circulant entre ces deux parois ;
- lesdits moyens pour contenir et canaliser le fluide comportent en outre des parois d'étagement disposées transversalement entre ladite paroi latérale du foyer et ladite paroi périphérique, créant des compartiments superposés par lesquels doit passer successivement ledit fluide lorsqu'on le fait circuler dans ledit ensemble.

Selon des caractéristiques préférées, chaque dite paroi d'étagement comporte au moins une perforation de dégazage.

On permet ainsi aux éventuels gaz de vaporisation du liquide de rejoindre rapidement le sommet.

Selon d'autres caractéristiques préférées, pour des raisons de simplicité et de commodité de réalisation :
. lesdits moyens pour contenir et canaliser le fluide comportent au moins deux compartiments successifs ayant une hauteur différente, avec celui situé au-dessus de l'autre qui est plus haut, alors que leur section en plan reste constante ;
. chaque dite paroi d'étagement comporte une rampe et une paroi horizontale qui fait moins d'un tour complet, ladite rampe se raccordant à son sommet à cette paroi horizontale alors qu'à sa base elle se raccorde à une autre paroi horizontale ;
. lesdits moyens pour contenir et canaliser le fluide comportent au moins deux dites parois d'étagement délimitant :
   - un premier compartiment situé entre une paroi de fond et une paroi horizontale d'une première paroi d'étagement sous la rampe de laquelle se raccorde, par ladite paroi périphérique, l'extrémité d'un conduit à l'autre extrémité duquel se trouve ledit orifice d'entrée de fluide froid dans ledit ensemble ;
   - un deuxième compartiment situé entre les parois horizontales desdites première et deuxième parois d'étagement ; et
   - un compartiment supérieur situé entre la paroi horizontale de la paroi d'étagement la plus élevée et une paroi supérieure ;
. une paroi tubulaire, prévue pour loger une partie terminale d'un brûleur à flamme pulsée qui forme lesdits moyens pour produire du feu, s'intercale dans la paroi horizontale de ladite première paroi d'étagement.

L'exposé de l'invention sera maintenant poursuivi par la description d'un exemple de réalisation, donnée ci-après à titre illustratif et non limitatif, en référence aux dessins annexés, sur lesquels :
- la figure 1 est une représentation schématique d'une installation de chauffage d'un fluide mettant en oeuvre l'invention ;
- la figure 2 est un ensemble de courbes où le temps figure en abscisse, montrant comment fonctionnent les différents éléments de l'installation de la figure 1 en fonction de la température à laquelle est portée le fluide ;
- la figure 3 est une vue en élévation d'un ensemble monobloc faisant partie de l'installation montrée sur la figure 1 ;
- la figure 4 est la vue en coupe repérée IV-IV sur la figure 3 ;
- la figure 5 est une vue en perspective éclatée de la partie inférieure de cet ensemble ;
- la figure 6 est une vue en coupe prise transversalement dans les parois qui forment cette partie inférieure, au niveau d'une perforation que comporte l'une des parois d'étagement ;
- la figure 7 est une vue partielle en coupe repérée VII-VII sur la figure 3 ;

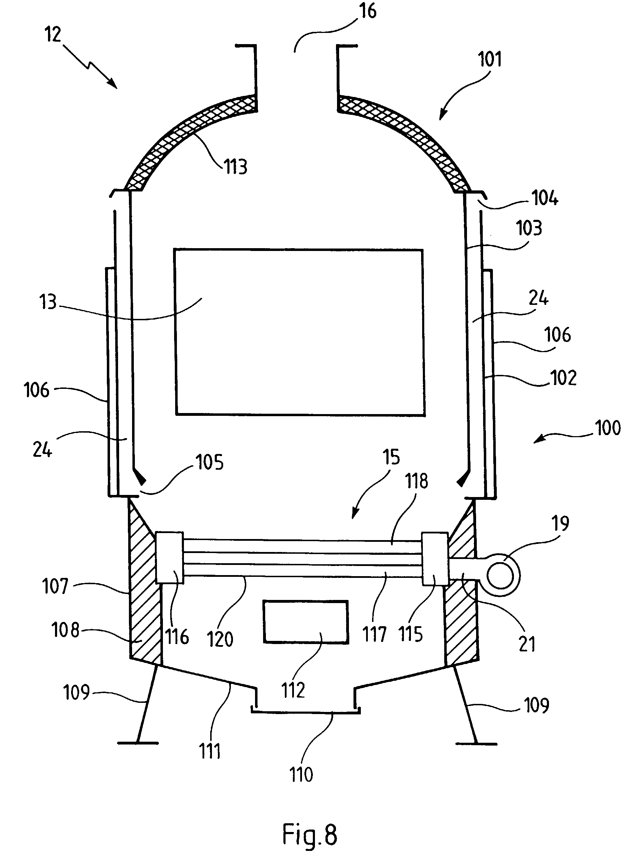

- la figure 8 est une vue schématique en coupe de l'incinérateur de déchets industriels faisant partie de l'installation montrée sur la figure 1 ;
- la figure 9 est une vue en perspective montrant la grille de combustion de cet incinérateur ;
- la figure 10 est une vue de dessous de l'un des tubes que comporte cette grille ; et
- la figure 11 est la vue en coupe repérée XI-XI sur la figure 9.

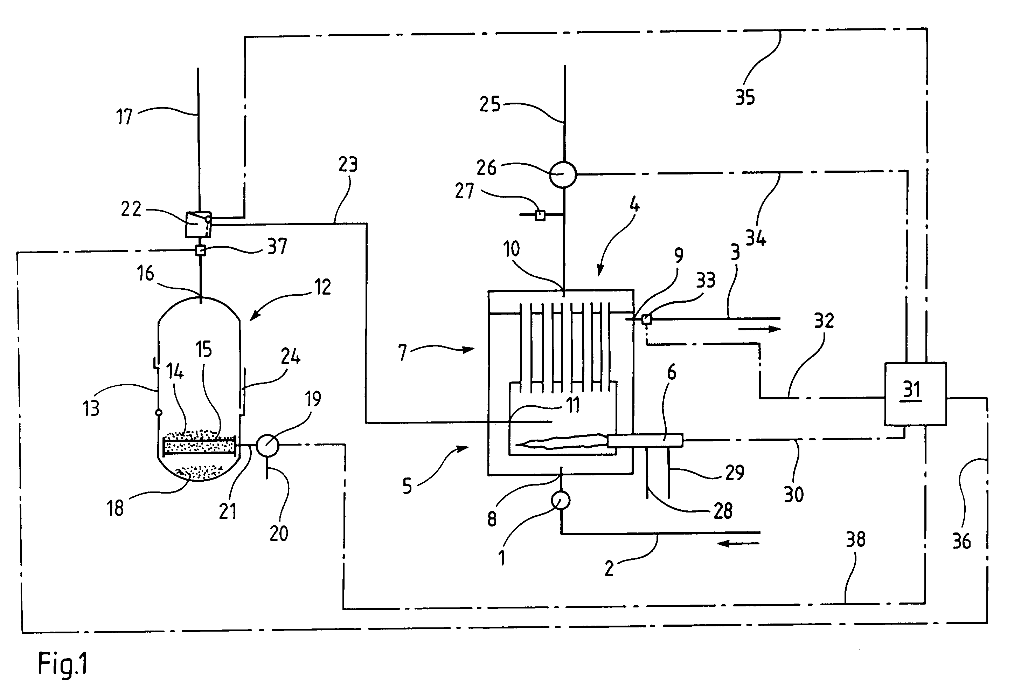

L'installation thermique montrée sur la figure 1 est prévue pour chauffer un fluide mis en circulation par la pompe 1, arrivant dans l'installation par la canalisation 2 de fluide froid et quittant l'installation par la canalisation 3 de fluide chaud.

Cette installation comporte un ensemble monobloc 4 du type chaudière, dans lequel circule le fluide, cet ensemble comportant un foyer 5 coopérant avec un brûleur 6 capable de produire à l'intérieur du foyer 5 du feu générant des fumées, et un échangeur 7 de chaleur fluide-fumées disposé au-dessus du foyer 5.

L'échangeur 7 comporte des parois qui sont baignées d'un côté par le fluide qui circule dans l'ensemble 4 entre l'orifice d'entrée 8 et l'orifice de sortie 9, alors que les fumées présentes à l'intérieur du foyer 5 doivent passer de l'autre côté de ces parois pour rejoindre la bouche 10 d'évacuation des fumées, située au-dessus de l'échangeur 7.

Le foyer 5, en outre des moyens de réception prévus pour le brûleur 6, comporte une bouche d'entrée 11 pour les fumées générées par l'incinérateur de déchets 12, de sorte que les fumées qui passent dans l'échangeur 7 peuvent provenir aussi bien du brûleur 6 que de l'incinérateur 12, séparément ou en combinaison.

L'incinérateur 12 comporte une porte 13 par laquelle on peut disposer des déchets 14 sur la grille 15, afin qu'ils y soient brûlés en dégageant des fumées qui s'échappent de l'incinérateur 12 par la bouche d'évacuation 16 à laquelle est raccordée la cheminée 17, les cendres 18 issues de la combustion des déchets 14 tombant au fond de l'incinérateur 12.

Comme on le décrira plus en détail par la suite, la grille 15 est creuse et présente des orifices d'éjection pour l'air qui peut y être introduit en faisant fonctionner la soufflante 19 qui aspire alors l'air ambiant par la canalisation 20 (qui peut être réduite à un simple orifice d'admission) et le refoule dans la canalisation 21 à laquelle est raccordée la grille 15, l'air ainsi éjecté de la grille 15 servant à activer la combustion des déchets 14.

Dans la cheminée 17, est disposé un clapet 22 qui communique avec la partie de la cheminée 17 située à son amont, à celle située à son aval, et avec le conduit 23 dont l'une des extrémités est raccordée au clapet 22 tandis que l'autre est raccordée à la bouche 11 d'entrée de fumée dans l'intérieur du foyer 5.

Le clapet 22 admet deux positions, où un volet qu'il comporte se dispose respectivement comme montré en trait interrompu et en trait plein. Dans la position correspondant au trait interrompu, l'accès au conduit 23 est fermé alors que celui donnant sur la partie aval de la cheminée est ouvert, de sorte que les fumées se dirigent vers cette partie aval, alors que c'est l'inverse dans la position correspondant au trait plein, dans laquelle les fumées produites dans l'incinérateur 12 passent par la partie amont de la cheminée 17, par le clapet 22, et par la conduite 23 pour rejoindre l'intérieur du foyer 5.

Comme on le décrira également plus en détail par la suite, l'incinérateur 12 présente au-dessus de la grille 15 un guide 24 d'admission d'air de tirage situé entre deux parois latérales se faisant face.

Dans la cheminée 25, à laquelle se raccorde la bouche 10 d'évacuation des fumées hors de l'ensemble 4, se trouve un accélérateur de tirage 26, alors qu'en amont de l'accélérateur 26 un casse-vide 27 se raccorde à la cheminée 25.

Etant donné que l'intérieur de l'ensemble 4, une fois que le brûleur 6 y est mis en place comme montré sur la figure 1, en ce qui concerne les fumées, ne s'ouvre que sur les bouches 10 et 11, l'accélérateur 26 sert à la fois pour l'ensemble 4 et pour l'incinérateur 12, lorsque le volet du clapet 22 est dans la position illustrée en trait plein.

Le casse-vide 27 permet d'éviter, en autorisant alors une entrée d'air dans la cheminée 25, que la dépression en amont de l'accélérateur 26 ne dépasse un seuil prédéterminé, ce qui est notamment utile lorsque le volet du clapet 22 est dans la position illustrée en trait interrompu.

Le brûleur 6 est du type à flamme pulsée, avec seulement une partie terminale qui pénètre dans l'ensemble 4, et uniquement le bout de son moyen d'éjection de flamme qui se trouve à l'intérieur du foyer 5, l'admission du carburant et du comburant, qui sont ici du gaz et de l'air, se faisant à l'extérieur de l'ensemble 4, respectivement par les conduits 28 et 29. Le brûleur 6 est en outre prévu pour que sa puissance puisse être réglée en fonction d'un signal de commande qui lui est appliqué par un lien électrique 30 à l'une des extrémités duquel il est relié, alors que l'autre extrémité de ce lien est reliée à une unité 31 de régulation automatique de l'installation.

L'unité 31 est également reliée, par le lien électrique 32, à un capteur 33 de la température du fluide chaud, disposé au niveau de l'orifice 9 de sortie du fluide chaud hors de l'ensemble 4, par le lien électrique 34 à l'accélérateur 26, par le lien électrique 35 au clapet 22, par le lien électrique 36 au capteur de température 37 disposé sur la cheminée 17 en amont du clapet 22, et par le lien électrique 38 à la soufflante 19.

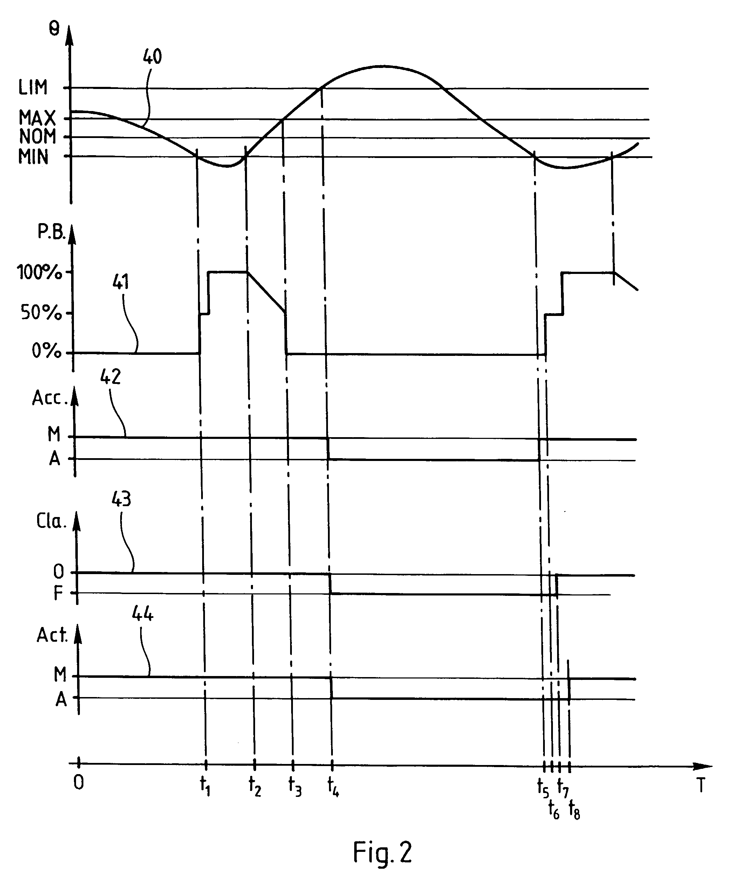

La régulation effectuée par l'unité 31 se fait (voir la courbe 40 de la figure 2) en fonction d'une consigne NOM nominale de température du fluide chaud, de part et d'autre de laquelle on définit un écart permis qui permet de fixer une consigne MIN de température minimale et une consigne MAX de température maximale, ainsi qu'en fonction d'une consigne LIM limite de température, supérieure à la consigne MAX, à partir de laquelle il convient de ne plus apporter de chaleur au fluide.

L'unité 31 a été programmée (elle est ici réalisée avec un automate programmable) pour produire le signal de commande de la puissance du brûleur 6 en fonction du signal fourni par le capteur 33, ainsi qu'en fonction de l'état de marche ou d'arrêt de l'accélérateur de tirage 26.

Plus précisément, suivant que le signal fourni par le capteur 33 est représentatif :
- d'une température devenant inférieure à MIN, l'unité 31 produit un signal pour amener le brûleur 6 à la puissance maximale ;
- d'une température devenant supérieure à MIN, l'unité 31 produit un signal faisant décroître progressivement la puissance du brûleur 6 ; et
- d'une température devenant supérieure à MAX, l'unité 31 produit un signal d'absence de production de feu.

S'agissant de l'état de marche ou d'arrêt de l'accélérateur 26, l'unité 31 produit, quel que soit le signal fourni par le capteur 33, un signal d'absence de production de feu par le brûleur 6 si l'accélérateur 26 n'est pas en fonctionnement.

A cet égard, l'unité 31 est programmée pour faire cesser le fonctionnement de l'accélérateur 26 lorsque le capteur 33 lui fournit un signal représentatif d'une température supérieure à LIM, et ne remet en fonctionnement l'accélérateur 26 que lorsque le signal fourni par le capteur 33 est représentatif d'une température inférieure à MIN.

L'unité 31 est également programmée pour faire cesser le fonctionnement de la soufflante 19 de l'incinérateur 12 lorsque le signal fourni par le capteur 33 est représentatif d'une température devenant supérieure à LIM, et pour ne permettre la remise en fonctionnement de la soufflante 19 que lorsque l'on peut fournir à nouveau au brûleur 6 un signal de commande à une puissance autre que l'absence de production de feu.

L'unité 31 est encore programmée pour ne faire passer le volet du clapet 22 dans la position illustrée en trait plein que si le signal issu du capteur de température 37 est supérieur à une température prédéterminée, par exemple 250°C.

On va maintenant décrire le fonctionnement de l'installation, à l'appui de la figure 2.

Toutes les courbes représentées sur cette figure ont en abscisse une échelle commune de temps, la courbe 40 montrant un exemple de variation de la température du fluide chaud telle que mesurée avec le capteur 33, la courbe 41 montrant le signal de commande de la puissance du brûleur 6 généré en réponse par l'unité de régulation 31, ce signal étant exprimé en pourcentage de la puissance maximale de ce brûleur, la courbe 42 montrant le signal de fonctionnement de l'accélérateur 26 généré en réponse par l'unité 31 (Marche ou Arrêt), la courbe 43 montrant le signal de fonctionnement du clapet 22 généré en réponse par l'unité 31 (Ouvert ou Fermé), et la courbe 44 montrant le signal de fonctionnement de la soufflante 19 d'activation de la combustion des déchets 14, généré en réponse par l'unité 31 (Marche ou Arrêt).

Dans l'exemple illustré, à l'instant 0, l'installation fonctionne en régime établi, avec l'accélérateur 26 en marche, le clapet 22 ouvert et la soufflante 19 d'activation de la combustion des déchets 14 également en marche (voir courbes 42 à 44), et avec la température qui est supérieure à la consigne MAX (voir courbe 40), et donc le signal de commande de puissance du brûleur 6 qui est à l'absence de production de feu (0 % de la puissance).

L'absence d'apport de chaleur par le brûleur 6 fait que la température du fluide chaud décroît progressivement, jusqu'à l'instant t₁ où la température du fluide chaud devient inférieure à la consigne MIN, de sorte que le signal de puissance du brûleur 6 passe progressivement à la pleine puissance (100 %), suivant une progression prédéterminée qui prévoit ici un palier à mi-puissance (50 %) pour diverses raisons, et notamment pour éviter des chocs thermiques dans l'ensemble 4.

A l'instant t₂, la température de fluide chaud redevient supérieure à MIN, de sorte que l'unité 31 va faire décroître progressivement la puissance du brûleur 6, jusqu'à l'instant t₃ où la température du fluide chaud va devenir supérieure à MAX, ce en réponse à quoi l'unité 31 va produire un signal de commande de puissance du brûleur 6 à 0 % (absence de production de feu).

En fait, malgré l'absence de production de chaleur par le brûleur 6, la température du fluide chaud continue à croître et, à l'instant t₄, devient supérieure à la consigne LIM, de sorte que l'unité 31 fait aussitôt cesser de fonctionner l'accélérateur 26, permet au clapet 22 de passer en position fermée, et fait cesser de fonctionner la soufflante d'activation 19, de sorte que l'on supprime totalement les apports de chaleur dans l'ensemble 4, et l'on voit que la température de fluide chaud finit par atteindre un maximum puis commence à décroître.

A l'instant t₅, la température du fluide chaud devient inférieure à la consigne MIN, de sorte que l'unité 31 remet en fonctionnement l'accélérateur de tirage 26 (courbe 42), de sorte qu'il devient possible à l'unité 31 de commander à nouveau le brûleur 6 pour qu'il produise du feu avec une certaine puissance, ce que fait l'unité 31 à partir de l'instant t₆ (courbe 41), et comme cette commande a été rendue possible, il devient également possible à l'unité 31 de faire passer le clapet 22 avec son volet dans la position illustrée en trait plein, ce qui se produit à l'instant t₇ (courbe 43), et rend possible la remise en fonctionnement de la soufflante 19, ce qui se produit à l'instant t₈ (courbe 44).

L'installation est alors à nouveau en régime établi.

Au démarrage de l'installation, on a une séquence similaire à celle s'étant produite entre les instants t₅ et t₈.

On observera que de nombreuses variantes sont possibles, en fonction des circonstances, pour réaliser la régulation automatique de l'installation montrée sur la figure 1, et en particulier qu'il est possible d'utiliser, à la place de la seule unité 31, plusieurs éléments de régulation distincts, par exemple un premier élément pour commander le clapet 22 en fonction du signal fourni par le capteur de température 37, et un deuxième élément pour commander le brûleur 6, l'accélérateur de tirage 26 et la soufflante 19 en fonction du signal fourni par le capteur de température 33.

On a naturellement prévu dans l'installation de la figure 1 diverses mesures de sécurité non décrites mais bien connues, prévues par la réglementation, et notamment de ne pas autoriser de commander le brûleur 6 pour produire du feu si la pompe 1 de circulation du fluide n'est pas en fonctionnement.

Dans l'exemple illustré, le fluide à chauffer est un liquide spécial pour installations thermiques, se vaporisant à plus haute température que l'eau, tel que celui vendu sous le nom de GILOTHERM (marque déposée).

Avec ce liquide, les consignes MIN, MAX et LIM sont par exemple fixées respectivement à 235°C, 245°C et 250°C.

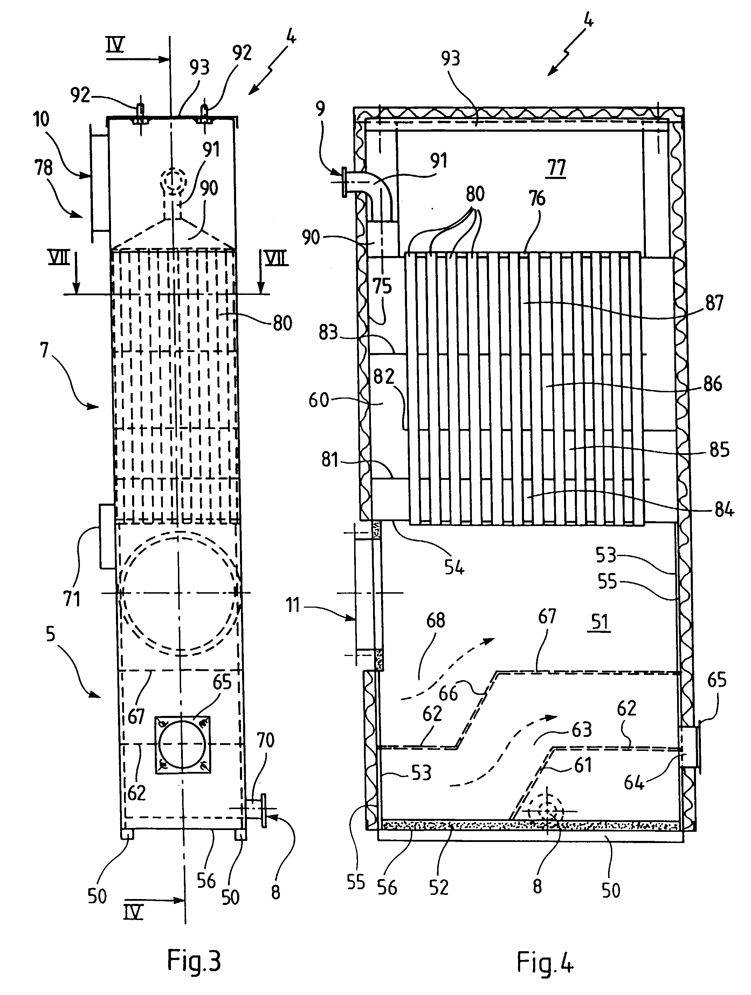

On va maintenant décrire plus en détail, à l'appui des figures 3 à 7, un exemple de réalisation de l'ensemble monobloc 4.

Dans cet exemple, l'ensemble 4 a une forme générale parallélépipédique, et est prévu pour reposer sur le sol grâce à des pieds formés par des barres longitudinales 50.

Comme on le voit plus particulièrement sur la figure 4, l'intérieur 51 du foyer 5 forme une chambre délimitée au fond par une couche 52 de béton réfractaire, sur les côtés par une paroi latérale métallique 53, et sur le dessus par une paroi métallique 54 séparant la chambre 51 de l'intérieur 60 d'une cuve de liquide que comporte l'échangeur 7.

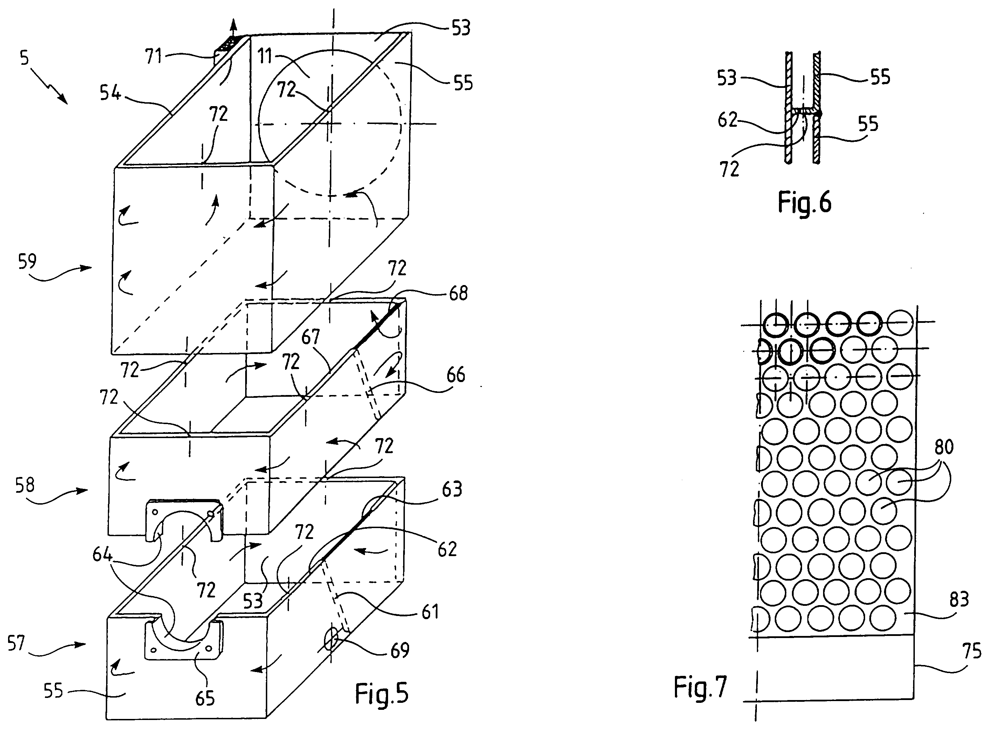

Afin que le liquide chauffé dans l'ensemble 4 puisse baigner l'extérieur de la paroi latérale 53 du foyer 5, et circuler le long de cette paroi, l'ensemble 4 comporte une paroi périphérique 55 qui vient doubler extérieurement la paroi 53, alors que la paroi de fond 56 de l'ensemble 4, sur laquelle est coulé le béton 52, va jusqu'à la paroi 55, de sorte qu'il y a entre les parois 53 et 55 un espace dans lequel le liquide peut être contenu, l'ensemble 4 comportant en outre deux parois d'étagement disposées transversalement entre les parois 53 et 55, qui créent trois compartiments superposés 57, 58 et 59 séparés par les parois horizontales des parois d'étagement (voir figure 5 où ces compartiments sont montrés disjoints), par lesquels doit passer successivement le liquide lorsqu'on le fait circuler dans l'ensemble 4 (voir détails ci-après).

La première paroi d'étagement comporte une rampe 61 et une paroi horizontale 62. La rampe 61 se raccorde à sa base à la paroi 56, tandis qu'à son sommet elle se raccorde à la paroi 62. Cette dernière fait un peu moins d'un tour complet, de sorte qu'il existe au-dessus et en arrière de la paroi 61 un passage 63, prévu pour permettre au liquide présent dans le compartiment 57, de passer au compartiment 58.

Dans la paroi 62, s'intercale une paroi tubulaire 64, qui se prolonge vers l'extérieur au-delà de la paroi 55, et qui se raccorde à son extrémité à une plaque 65 munie de trous de fixation. La paroi 64 et la plaque 65 servent à la réception du brûleur 6 dans l'ensemble 4, la partie terminale du brûleur 6 se logeant dans l'orifice délimité par la paroi 64 alors que la plaque 65 sert à la fixation de ce brûleur par boulonnage.

De même que la première, la deuxième paroi d'étagement comporte une rampe et une paroi horizontales faisant moins d'un tour complet, respectivement 66 et 67, la base de la rampe 66 se raccordant à l'extrémité de la paroi 62 opposée à celle se raccordant à la rampe 61, le sommet de la rampe 66 se raccordant à la paroi 67, celle-ci s'arrêtant au bout situé à droite de la face arrière du foyer tel qu'on le voit sur la figure 5, ce qui laisse au-dessus et en arrière de la rampe 66 un orifice par lequel le liquide peut passer du compartiment 58 au compartiment 59.

Dans ce dernier compartiment, la face que l'on voit à l'arrière sur la figure 5, n'est pas doublée extérieurement par la paroi périphérique 55, la bouche 11 d'entrée de fumée y étant pratiquée. Le dessus du compartiment 59 est fermé par la paroi 54 qui sépare l'intérieur 51 du foyer 5 de l'intérieur 60 de la cuve de l'échangeur 7.

La paroi périphérique 55, à sa base, sous la rampe 61, présente un orifice 69 autour duquel se raccorde l'extrémité d'un conduit 70 (non représenté sur la figure 5) à l'autre extrémité duquel se trouve l'orifice 8 d'entrée de liquide dans l'ensemble 4 (voir figure 3), la paroi 55 comportant également, à l'emplacement qu'on voit en haut et en arrière du panneau situé à gauche sur la figure 5, un orifice (non représenté) de sortie du liquide vers une extrémité d'un raccord 71 à l'autre extrémité duquel se trouve un orifice d'entrée dans la cuve de l'échangeur 7.

Ainsi que montré avec des flèches sur les figures 4 et 5, le liquide pénétrant dans l'ensemble 4, fait le tour du compartiment 57, puis est guidé par la rampe 61 à s'élever de sorte qu'il passe par l'orifice 63 pour rejoindre le compartiment 58 dont il fait également le tour complet jusqu'à être guidé à s'élever par la rampe 66, ce qui le fait passer par l'orifice 68 pour rejoindre le compartiment 59 dont il parcourt les trois faces jusqu'à rejoindre le conduit 71.

On observera que les compartiments 57 et 58 sont approximativement de la même hauteur, alors que la hauteur du compartiment 59 est plus importante.

Etant donné que la section en plan de chacun de ces compartiments reste constante, la section d'écoulement du liquide dans les compartiments 57 et 58 est plus petite que celle du compartiment 59, et comme le débit est le même dans tous les compartiments, la vitesse de circulation du liquide est plus élevée dans les compartiments 57 et 58.

Le liquide est donc capable de prélever davantage de chaleur au niveau des compartiments 57 et 58, qui sont précisément situés au niveau de la flamme produite par le brûleur 6, c'est-à-dire au niveau où le flux de chaleur produit est le plus important.

On voit qu'en adaptant ainsi la vitesse de circulation du liquide au flux de chaleur, on simplifie la construction de l'ensemble 4, en limitant le nombre de parois d'étagement.

On notera que les parois 62, 67 et 54 sont munies de perforations de dégazage 72, comme montré sur la figure 6 pour la paroi 62.

Les orifices 72 permettent à la vapeur s'étant éventuellement formée à partir du liquide, de passer directement d'un compartiment à l'autre sans en faire le tour, de façon à éviter une accumulation de vapeur.

On observera par ailleurs que la bouche 11 d'entrée de fumées dans le foyer, est disposée au-dessus, et à l'opposé des moyens de réception 64 et 65 prévus pour le brûleur 6.

Par conséquent, la partie du brûleur se trouvant à l'intérieur du foyer (le bout des moyens d'éjection de flamme) se trouve aussi loin que possible de la bouche 11, de sorte que l'on minimise les risques que les fumées pénétrant dans le foyer ne dégradent cette partie du brûleur, et plus généralement ce dernier, notamment lorsqu'il ne fonctionne pas.

En outre, du fait que les fumées arrivent dans le foyer au-dessus de la flamme qui y est produite, les éventuels imbrûlés que pourraient encore contenir ces fumées (il est fréquent que les fumées issues d'un incinérateur de déchets en comportent une certaine quantité) vont se mettre à brûler, ce qui d'une part, va permettre de bénéficier d'un apport supplémentaire en énergie, et d'autre part va provoquer une purification des fumées issues de l'incinérateur 12, dont le rejet à l'atmosphère sera par conséquent moins polluant que si il avait été effectué directement par la cheminée 17.

Ainsi qu'indiqué précédemment, l'échangeur de chaleur liquide-fumées 7 comporte une cuve ayant un intérieur 60 où il est prévu que circule le liquide, cette cuve présentant en outre de la paroi inférieure 54, une paroi latérale 75, ainsi qu'une paroi supérieure 76 qui sépare l'intérieur 60 de la cuve et l'intérieur 77 d'une boîte à fumées 78 s'ouvrant sur la bouche d'évacuation 10.

L'échangeur 7 comporte également un faisceau de tubes 80 identiques, parallèles entre eux, et traversant chacun la paroi 54, l'intérieur 60 de la cuve et la paroi 76, de sorte que chaque tube a une extrémité qui se trouve dans la chambre 51 et dans l'intérieur 77 de la boîte à fumées 78, les intérieurs respectifs des tubes 80 formant les moyens de passage qu'empruntent les fumées présentes dans la chambre 51 pour traverser l'échangeur 7 et rejoindre la boîte à fumées 78.

La cuve de l'échangeur 7 comporte des plaques de chicane, ici au nombre de trois, respectivement 81, 82 et 83, qui créent dans la cuve quatre compartiments superposés orientés transversalement aux tubes 80, respectivement 84, 85, 86 et 87.

On voit que les plaques 81 à 83 sont rectangulaires comme l'est la section en plan de la cuve, mais sont moins longues que celle-ci et fixées à la paroi 75 par un premier grand côté, l'un des petits côtés et le deuxième grand côté, un espace restant entre le deuxième petit côté et la paroi 75 pour laisser un passage entre deux compartiments successifs.

Comme on le voit sur la figure 4, le passage entre les compartiments 84 et 85 se trouve du côté situé à droite sur cette figure, celui entre les compartiments 85 et 86 à gauche, celui entre les compartiments 86 et 87 à droite, alors que l'orifice d'entrée dans la cuve qui se trouve à l'une des extrémités du conduit 71, est situé à gauche, ainsi que l'orifice de sortie de la cuve ménagé dans la paroi 76.

Chaque plaque de chicane sépare ainsi deux compartiments successifs en les laissant communiquer par une extrémité opposée à celle par laquelle le liquide pénètre dans le compartiment du dessous, de sorte que le parcours du liquide dans la cuve forme un zigzag dont chaque branche correspond à un compartiment : le liquide pénètre dans le compartiment 84 par la gauche, il parcourt ce compartiment jusqu'à son extrémité droite à laquelle il rejoint le compartiment 85 qu'il parcourt jusqu'à son extrémité gauche à laquelle il rejoint le compartiment 86 qu'il parcourt jusqu'à son extrémité droite à laquelle il rejoint le compartiment 87 qu'il parcourt jusqu'à son extrémité gauche à partir de laquelle il quitte la cuve.

On observera que les hauteurs respectives des compartiments 84 et 87 croissent au fur et à mesure que l'on s'élève.

Etant donné que la section en plan de la cuve reste constante, le liquide va circuler de moins en moins vite au fur et à mesure qu'il passe d'un compartiment à celui qui est situé au-dessus de lui, ce qui permet, comme autour du foyer 5, d'ajuster la vitesse de circulation du liquide à l'intensité du flux de chaleur à transférer au liquide à travers les parois des tubes 80.

Dans l'exemple illustré, le débit de liquide est de l'ordre de 50 m³/h et la vitesse de circulation respectivement de 1,54 m/s, 0,77 m/s, 0,38 m/s, 0,32 m/s, 0,21 m/s et 0,16 m/s, respectivement dans les compartiments 57 et 58, 59, 84, 85, 86 et 87.

Comme on le voit sur la figure 7, les tubes 80 sont disposés en quinconce, de la façon dite "en pas triangle".

Ainsi, le liquide qui passe entre deux tubes rencontre nécessairement un tube de la rangée suivante, ce qui permet d'harmoniser de façon particulièrement efficace l'écoulement du liquide dans les compartiments (les courants préférentiels sont évités) et donc d'obtenir un excellent coefficient d'échange thermique.

Le fait que les tubes soient particulièrement proches les uns des autres est également favorable à cet égard.

La forme rectangulaire des compartiments offre l'avantage que la section d'écoulement tout au long d'un compartiment reste constante, ce qui est aussi favorable à avoir un écoulement homogène dans les compartiments.

Les orifices pratiqués dans les plaques de chicane 81 à 83 ont des dimensions légèrement supérieures aux dimensions extérieures des tubes 80, de sorte qu'il reste un petit espace par lequel peuvent passer les gaz issus d'une éventuelle vaporisation du liquide, ce qui permet le dégazage de la cuve de l'échangeur 7, c'est-à-dire de permettre à ces gaz de gagner rapidement le sommet de la cuve.

De même, pour permettre à coup sûr à ces vapeurs de quitter l'ensemble 4, l'orifice de sortie de fluide dans la cuve (non représenté) débouche dans un élément 90 convergeant vers le haut, au sommet duquel se raccorde une extrémité d'un conduit 91 à l'autre extrémité duquel se trouve l'orifice 9 de sortie de fluide hors de l'ensemble 4.

On observera que la bouche d'évacuation 10 est disposée sur une paroi latérale de la boîte à fumées 18, et que la paroi supérieure de cette dernière est amovible, par démontage des boulons 92 (figure 3). Ainsi, le ramonage des tubes 80 est rendu possible par simple enlèvement de la paroi supérieure 93 de la boîte à fumées, sans qu'il soit nécessaire de démonter la cheminée qui se raccorde à la bouche 10.

On notera que pour permettre, comme indiqué précédemment, à l'accélérateur 26 de servir aussi bien pour l'ensemble 4 que pour l'incinérateur 12, l'intérieur 51 du foyer 5 forme une chambre fermée ne s'ouvrant que sur l'orifice de montage du brûleur 6 (orifice qui est obturé quand le brûleur est mis en place), sur la bouche 11 d'entrée de fumées et sur les tubes 80 de l'échangeur 7 ; les tubes 80 ne s'ouvrent que sur l'intérieur 51 du foyer 5 et sur la boîte à fumées 78 ; tandis que cette dernière ne s'ouvre que sur les tubes 80 et sur la bouche 10 d'évacuation de fumées.

Comme on le voit sur la figure 4, l'élément monobloc 4 comporte extérieurement, sur ses parois latérales et supérieure, des panneaux d'isolant thermique.

Dans l'exemple illustré, les tubes 80 et les plaques de chicane 81 à 83 sont respectivement verticaux et horizontaux, mais en variante, il est possible de prévoir une certaine obliquité.

On va maintenant décrire plus en détail l'incinérateur à déchets 12.

L'enveloppe de l'incinérateur 12, à l'intérieur de laquelle est disposée la grille 15, est formée d'une façon générale par deux éléments en forme de cloche, respectivement un élément inférieur 100 et un élément supérieur 101, qui sont emboîtés tête-bêche l'un dans l'autre, avec la portion terminale 102 de la paroi latérale de l'élément 100 qui regarde la portion terminale 103 de la paroi latérale de l'élément 101, les portions 102 et 103 étant ici disposées respectivement extérieurement et intérieurement.

L'espace situé entre les portions 102 et 103 fait partie du guide 24 d'admission d'air de tirage à l'intérieur de l'incinérateur, mentionné précédemment, des entretoises (non représentées) étant prévues pour que l'élément 101 puisse être supporté et maintenu vis-à-vis de l'élément 100 tout en permettant à l'air de circuler dans le guide 24.

On voit que le guide 24 a globalement une forme tubulaire, l'admission d'air extérieur 104 étant annulaire et disposée au sommet du guide 24 alors qu'à la base de celui-ci se trouve l'admission 105 d'air de tirage dans l'enveloppe, également annulaire.

Avec une telle disposition, les éléments 100 et 101 de l'enveloppe de l'incinérateur peuvent se dilater indépendamment l'un de l'autre, ce qui évite la naissance de certaines contraintes thermiques dans l'enveloppe, et facilite donc la construction de cette dernière.

En outre, le fait qu'il y ait de l'air qui circule entre les parois 102 et 103 permet d'obtenir un refroidissement de celles-ci, de sorte que l'on peut éventuellement se contenter de doubler extérieurement la paroi du guide 24 pour être compatible avec les exigences de sécurité du personnel, comme dans l'exemple illustré où le doublage est effectué par une paroi 106.

On observera que la grille 15 est disposée à l'intérieur de l'enveloppe en-dessous de l'admission 105, l'élément inférieur 100 comportant des moyens de réception de cette grille prévus en conséquence, la grille étant montée vis-à-vis de l'élément 100 et vis-à-vis de la soufflante 19, d'une façon amovible, de manière à permettre son remplacement, et également d'utiliser un même élément 100 pour des grilles de conformation différente.

La grille 15 est plus précisément située au niveau de la portion 107 de la paroi latérale de l'élément inférieur qui est située en-dessous de la portion 102, et qui est recouverte intérieurement d'une couche 108 de béton réfractaire dans laquelle sont prévus certains des moyens de réception de la grille 15.

L'élément inférieur 100 comporte encore des pieds 109 de support de l'enveloppe, une trappe 110 de vidange des cendres, située au centre de son fond 111, qui est tronconique, ainsi qu'une trappe de visite 112, située au niveau de la paroi 107 et de la couche 108, l'orifice de la trappe traversant cette paroi et cette couche.

L'élément supérieur 101 en forme de cloche présente à son sommet la bouche 16 d'évacuation des fumées, sa paroi supérieure comportant à son sommet, autour de cette bouche, un revêtement intérieur 113 en céramique, ce matériau étant choisi pour cet emplacement pour des questions de durabilité.

La porte 13 de chargement des déchets ou produits à brûler est prévue au niveau des parois 102 et 103, une ouverture de mêmes dimensions que la porte 13 étant prévue dans chacune de ces parois, la porte 13 étant montée dans la paroi 103.

Afin d'éviter que la porte 13 atteigne des températures élevées dangereuses pour le personnel, elle est revêtue intérieurement d'une couche relativement épaisse d'isolant thermique. L'orifice de mêmes dimensions que la porte 13 pratiqué dans la paroi 102 permet également à une certaine quantité d'air de tirage de pénétrer à l'intérieur du guide 24.

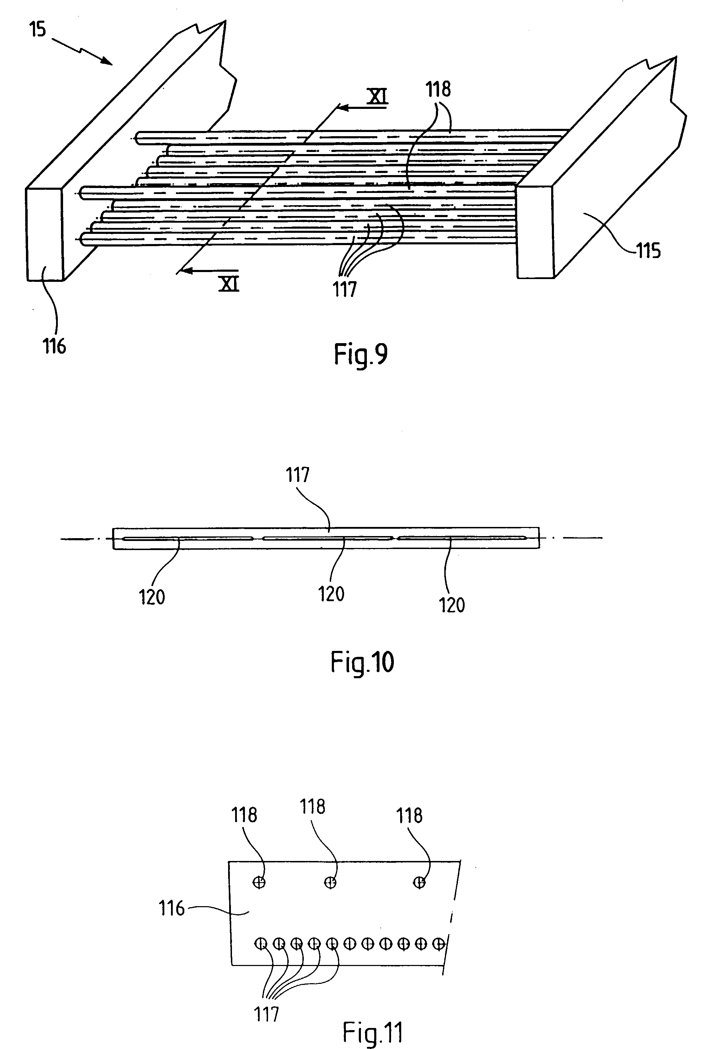

Comme on le voit plus particulièrement sur les figures 9 et 11, la grille 15 est formée par deux éléments parallélépipédiques creux 115 et 116 entre lesquels sont disposés un certain nombre de tubes 117 et de barres 118.

Les tubes 117 sont disposés côte à côte horizontalement de façon à former un plan de support pour les déchets pendant qu'ils brûlent alors que les barres 118 sont disposées au-dessus de ce plan, en étant également, à leur niveau, disposées côte à côte horizontalement, les barres 118 étant prévues pour recevoir depuis le dessus les déchets introduits dans l'incinérateur 12 par la porte 13, les déchets ainsi introduits ne pouvant venir se déposer sur les tubes 117 que s'ils peuvent passer entre les barres 118, qui empêchent ainsi que des déchets nouvellement introduits viennent étouffer les déchets en train de brûler sur les tubes 117, le choc subit par les déchets à leur arrivée sur les barres 118 permettant en outre de les décompacter.

Les tubes 117 sont raccordés aux éléments 115 et 116 de sorte que leurs intérieurs respectifs communiquent, l'élément 115 étant en outre raccordé, au niveau d'un orifice non visible sur la figure 9, au conduit 21 de la soufflante 19, l'élément 115 servant ainsi de répartiteur de l'air fourni par la soufflante 19 dans les différents tubes 117.

Comme on le voit sur la figure 10, chacun de ces tubes présente dans sa partie la plus basse des fentes allongées 120 qui sont les orifices par lesquels est ejecté l'air introduit dans la grille par la soufflante 19.

Les fentes 120 étant ménagées dans la partie la plus basse des tubes 117, avec des bords parallèles entre eux, l'air est éjecté en-dessous des tubes 117, ici avec une vitesse de l'ordre de 15 m/sec, il va parcourir une certaine distance vers le bas avec sa vitesse qui va ralentir, puis cet air va se mettre à remonter et il va venir au contact des déchets en train de brûler sur les tubes 117, déchets à qui il va fournir l'air dit "primaire", qui sert à décomposer les éléments à incinérer en produits de combustion qui pourront ensuite s'enflammer grâce à l'air dit "secondaire" arrivant dans l'enveloppe par le guide 24.

Le fait que les fentes 120 soient disposées sur le bas des tubes 117, permet donc, du fait que l'air descend d'abord vers le bas et qu'il remonte ensuite en se répartissant régulièrement, de le fournir d'une façon particulièrement homogène aux déchets présents sur la grille, ce qui est particulièrement utile à la qualité de la combustion effectuée dans l'incinérateur 12, et évite d'apporter une quantité d'air trop importante à l'intérieur de celui-ci, qui diluerait fortement les fumées qui y sont produites, et donc qui en diminuerait la température, et abaisserait par conséquent l'efficacité de l'échange thermique se réalisant dans l'échangeur 7.

On évite également que l'air sortant des tubes ne vienne pulvériser et entraîner avec lui les particules les plus friables des déchets en train de brûler.

En outre, du fait de leur emplacement, les fentes 120 subissent des risques particulièrement faibles d'être bouchées par les déchets ou par leurs cendres.

L'élément parallélépipédique 116, qui est également creux, contribue également dans une certaine mesure à répartir l'air introduit par la soufflante 19 dans les différents tubes 117.

Le fait que l'air circule dans les tubes 117 procure un certain refroidissement de ceux-ci, et permet donc d'éviter qu'ils ne soient portés à une température trop élevée, ce qui est favorable à leur durée de vie (une grille, notamment métallique, se dégrade rapidement lorsqu'elle est portée à trop haute température).

L'air éjecté par les tubes 117 subit de son côté un certain réchauffement dans ces tubes, et comme il séjourne en outre un certain temps dans l'enveloppe avant de venir en contact avec les déchets disposés sur les tubes 117, cet air parvient au contact de ces déchets avec une température relativement élevée favorable à la bonne combustion de ces déchets.

Dans l'exemple illustré, les barres 118 sont également creuses, de sorte que l'air circule dans celles-ci et leur procure un certain refroidissement favorable à leur tenue mécanique et dans le temps.

En variante, il est possible de prévoir des barres pleines, ou de pratiquer dans les barres creuses des fentes du même genre que les fentes 120 des tubes 117.

Le fait que les fentes 120 soient très allongées avec un faible espace entre elles fait que les jets d'air qui s'en échappent, et qui divergent, forment assez rapidement un front uniforme où a disparu la discontinuité provoquée par l'espacement entre les fentes, cette conformation des fentes étant également favorable sur le plan de la résistance des tubes.

De nombreuses variantes sont possibles en fonction des circonstances, on peut notamment prévoir que la grille soit formée avec des éléments creux munis d'orifices d'éjection de l'air qui sont agencés entre eux avec une forme différente de celle de la grille 15.

On observera que l'incinérateur 12 est susceptible d'être utilisé indépendamment, c'est-à-dire avec évacuation des fumées uniquement par sa propre cheminée, auquel cas un accélérateur de tirage peut être prévu dans cette dernière ; et que la source extérieure de fumées à laquelle est relié l'ensemble 4, peut être différente de l'incinérateur 12.

On observera également qu'une variante de l'ensemble 4, sans bouche 11 d'entrée de fumées, reste d'une utilisation avantageuse, compte-tenu des performances de son échangeur 7 et de son échangeur périphérique situé au niveau du foyer 5.

Enfin, d'une façon générale, on rappelle que l'invention ne se limite pas aux exemples décrits et représentés.

## Revendications

1. Ensemble monobloc pour installation de chauffage d'un fluide, comportant :
- un foyer, adapté à coopérer avec des moyens (6) pour produire, à l'intérieur du foyer, du feu générant dès fumées ; et
- un échangeur de chaleur comportant au moins une paroi (53 ; 80) d'un côté duquel il est prévu que circule ledit fluide, mis en circulation dans ledit échangeur entre un orifice d'entrée de fluide froid et un orifice de sortie de fluide chaud ;
caractérisé en ce que ledit échangeur de chaleur comporte des compartiments superposés (57-59 ; 84-87) par lesquels doit passer successivement ledit fluide avec au moins un compartiment (58 ; 84, 85, 86) dont la section d'écoulement est plus petite que celle du compartiment (59 ; 85, 86, 87) qui lui succède.

2. Ensemble selon la revendication 1, caractérisé en ce que ledit échangeur de chaleur est un échangeur fluide-fumées (7) qui comporte :
- une cuve à l'intérieur (60) de laquelle il est prévu que circule ledit fluide, présentant une paroi inférieure (54) séparant l'intérieur (60) de la cuve de l'intérieur (51) dudit foyer (5), et une paroi supérieure (76) séparant l'intérieur (60) de la cuve de l'intérieur (77) d'une boîte à fumées (78) ; et
- un faisceau de tubes (80) traversant chacun ladite paroi inférieure (54) de la cuve, l'intérieur de celle-ci et sa paroi supérieure (76), de sorte que chaque tube (80) a une extrémité qui se trouve dans ledit foyer (5) et l'autre dans ladite boîte à fumées (78), les intérieurs respectifs des tubes (80) formant les moyens de passage qu'empruntent les fumées présentes dans le foyer (5) pour traverser l'échangeur (7) et rejoindre la boîte à fumées (78).

3. Ensemble selon la revendication 2, caractérisé en ce que ladite cuve comporte des plaques de chicane (81-83), traversées par lesdits tubes (80), créant dans la cuve des compartiments (84-87) superposés orientés transversalement auxdits tubes (80), qui sont parallèles entre eux, chaque plaque de chicane (81-83) séparant deux compartiments successifs en les laissant communiquer par une extrémité opposée à l'extrémité par laquelle le fluide pénètre dans le compartiment du dessous, de sorte que le parcours du fluide dans ladite cuve forme un zigzag dont chaque branche correspond à un compartiment.

4. Ensemble selon la revendication 3, caractérisé en ce que les hauteurs respectives desdits compartiments (81-87) croissent au fur et à mesure que l'on s'élève, alors que la section en plan de ladite cuve reste constante.

5. Ensemble selon l'une quelconque des revendications 2 à 4, caractérisé en ce que ladite cuve a une section en plan qui est rectangulaire, et en ce que lesdits tubes (80) sont disposés en quinconce.

6. Ensemble selon l'une quelconque des revendications 2 à 5, caractérisé en ce que les orifices pratiqués dans lesdits plaques de chicane (81-83) pour lesdits tubes (80) ont des dimensions légèrement supérieures aux dimensions extérieures des tubes (80).

7. Ensemble selon l'une quelconque des revendications 2 à 6, caractérisé en ce que ladite cuve débouche dans un élément (90) convergeant vers le haut, au sommet duquel se raccorde une extrémité d'un conduit (91) à l'autre extrémité duquel se trouve ledit orifice (9) de sortie du fluide chaud hors dudit ensemble (4).

8. Ensemble selon la revendication 1, caractérisé en ce que ledit échangeur comporte des moyens (55, 61, 62, 66, 67) pour contenir ledit fluide de sorte que celui-ci baigne l'extérieur de la paroi latérale (53) du foyer (5), et pour canaliser le fluide de sorte qu'il se déplace le long de cette paroi (53) lorsqu'on le fait circuler dans ledit ensemble (4), lesdits moyens pour contenir et canaliser le fluide étant situés, dans le trajet que suit le fluide dans ledit ensemble, entre ledit orifice (8) d'entrée de fluide et ledit échangeur (7) fluide-fumées.

9. Ensemble selon la revendication 8, caractérisé en ce que lesdits moyens pour contenir et canaliser le fluide comportent une paroi périphérique (55) qui vient doubler extérieurement la paroi latérale (53) du foyer, le fluide étant contenu et circulant entre ces deux parois (53, 55).

10. Ensemble selon la revendication 9, caractérisé en ce que lesdits moyens pour contenir et canaliser le fluide comportent en outre des parois d'étagement (61, 62, 66, 67) disposées transversalement entre ladite paroi latérale du foyer (53) et ladite paroi périphérique (55), créant des compartiments superposés (57-59) par lesquels doit passer successivement ledit fluide lorsqu'on le fait circuler dans ledit ensemble.

11. Ensemble selon la revendication 10, caractérisé en ce que chaque dite paroi d'étagement comporte au moins une perforation de dégazage (72).

12. Ensemble selon l'une quelconque des revendications 10 ou 11, caractérisé en ce que lesdits moyens pour contenir et canaliser le fluide comportent au moins deux compartiments successifs (58, 59) ayant une hauteur différente, avec celui situé au-dessus de l'autre qui est plus haut, alors que leur section en plan reste constante.

13. Ensemble selon l'une quelconque des revendications 10 à 12, caractérisé en ce que chaque dite paroi d'étagement comporte une rampe (61, 66) et une paroi horizontale (62, 67) qui fait moins d'un tour complet, ladite rampe (61, 66) se raccordant à son sommet à cette paroi horizontale (62, 67) alors qu'à sa base elle se raccorde à une autre paroi horizontale (56, 62).

14. Ensemble selon la revendication 13, caractérisé en ce que lesdits moyens pour contenir et canaliser le fluide comportent au moins deux dites parois d'étagement délimitant :
- un premier compartiment (57) situé entre une paroi de fond (56) et une paroi horizontale (62) d'une première paroi d'étagement sous la rampe (61) de laquelle se raccorde, par ladite paroi périphérique (55), l'extrémité d'un conduit (70) à l'autre extrémité duquel se trouve ledit orifice (8) d'entrée de fluide froid dans ledit ensemble ;
- un deuxième compartiment situé entre les parois horizontales (62, 67) desdites première et deuxième parois d'étagement ; et
- un compartiment supérieur (59) situé entre la paroi horizontale (67) de la paroi d'étagement la plus élevée et une paroi supérieure (54).

15. Ensemble selon la revendication 14, caractérisé en ce qu'une paroi tubulaire (64), prévue pour loger une partie terminale d'un brûleur (6) à flamme pulsée qui forme lesdits moyens pour produire du feu, s'intercale dans la paroi horizontale (62) de ladite première paroi d'étagement.
